# EUROPEAN PATENT APPLICATION

(11) **EP 3 315 400 A1**
(43) Date of publication of application: **02.05.2018**
(21) Application number: 16195552.1
(22) Date of filing: 25.10.2016
(51) Int. Cl.: B64C 11/28

(54) **FOLDING PROPELLER**

(71) Applicant: AeroMobil R&D, s. r. o., 82106 Bratislava-mestska cast Podunajske Biskupice (SK)
(72) Inventor: Klein, Stefan, 949 01 Nitra (SK); Macandrew, Doug, 841 05 Bratislava-Zahorska Bystrica (SK); Rooms, Simon, 841 02 Bratislava (SK); Urik, Tomas, 908 41 Sastin-Straze (SK); Daniel, Milos, 036 01 Martin (SK)
(74) Representative: Finnegan Europe LLP

(57) **Abstract**

An aircraft, such as a flying car, comprising a body structure, lift structures (such as wings), control structures (such as fins, elevators, and ailerons), and a motor; a propeller connected to the motor and mounted for rotation about a drive axis to provide thrust; the propeller comprising a hub having a plurality of blades connected thereto; and a plurality of blade housings adjacent the propeller and extending substantially parallel to the drive axis; wherein the blades are mounted on the hub so as to be moveable between an expanded position in which the blades project radially from the hub, and a folded position in which each blade extends axially from the hub so as to lie in a respective blade housing.

## Description

### FIELD OF THE INVENTION

This invention relates to a folding propeller suitable for use on an aircraft. In one particular embodiment, the aircraft is a convertible vehicle having a flight configuration and a road use configuration. Such vehicles are commonly known as flying cars or roadable aircraft (hereafter "flying cars").

### BACKGROUND

There have been a number of previous proposals for flying car designs, i.e. vehicles that can be fully complaint with legal and practical requirements for both road and flight use. Examples include the Terrafugia Transition (WO 2007/114877), the Carplane (http://carplane.de/), the AeroMobil (WO 2013/03240), and the Moller Skycar (http://moller.com/). The first three of these all include a propeller as the means of providing thrust in the flight configuration, in particular in a pusher arrangement.

One problem associated with the use or propellers in flying cars is that the propeller blades are relatively sharp and many regulations regarding road vehicles specifically prohibit the presence of such sharp structures on vehicles for use on public roads. This invention is an attempt to address this problem.

### SUMMARY

A first aspect of the invention provides an aircraft, such as a flying car, comprising a body structure, lift structures (such as wings), control structures (such as fins, elevators, and ailerons), and a motor; a propeller connected to the motor and mounted for rotation about a drive axis to provide thrust; the propeller comprising a hub having a plurality of blades connected thereto; and a plurality of blade housings adjacent the propeller and extending substantially parallel to the drive axis; wherein the blades are mounted on the hub so as to be moveable between an expanded position in which the blades project radially from the hub, and a folded position in which each blade extends axially from the hub so as to lie in a respective blade housing.

By positioning the propeller blades in housing, access to sharp edges and tips is limited and so provides a solution to the safety requirements for public road use.

The propeller can be mounted at a foremost extremity (tractor configuration) or a rearmost extremity (pusher configuration) of the aircraft.

In one embodiment, the aircraft comprises horizontal and/or vertical control surfaces adjacent the propeller hub. In this case, blade housings can be provided on either side of at least one control surface. Where the control surfaces form part of a tail section, the tail section including horizontal control surface, blade housings can be provided above and below the horizontal control surface.

Moveable housing covers can be provided adjacent the blade housings, each cover being movable between a closed position in which it closes a respective housing cavity, and an open position in which the respective blade housing is open to allow a propeller blade to be moved into or out of the blade housing.

The hub cab comprise a locking mechanism that allows the blades to be moved between the expanded and folded positions, and is operable to lock the blades in the expanded position.

Where the aircraft comprises a convertible vehicle having a flight configuration and a road use configuration (a flying car), the road use configuration can include the folded position for the propeller blades. The convertible vehicle can comprise wings that are moveable between an extended position for the flight configuration, and a folded position for the road use configuration, the long axis of each wing lying substantially parallel to the long axis of the body in the folded position. In this case, the propeller can be mounted on a tail structure comprising horizontal and vertical control surfaces, and wheels to support the vehicle when on the ground. Furthermore, when the propeller is in the folded position, no part of the blades extend rearward of the hub.

Where the propeller has three blades, the propeller can be positioned with one of the blades projecting substantially vertically upwards immediately prior to moving the blades into the folding position, such that the blade lies in a corresponding blade housing in an upper surface of the body structure when in the folded position.

A propeller shaft can extend along the drive axis and connect the hub to the motor, the blades in the folded position lying substantially parallel to the drive shaft.

Further variations can be made within the scope of the invention.

### DRAWINGS

Figure 1 shows a front perspective view of a flying car in a flight configuration;
Figure 2 shows a front perspective view of a flying car in a road use configuration;
Figure 3 shows a partial rear view of the flying car of Figure 2 with a propeller in an extended position; and
Figure 4 shows a partial rear view of the flying car of Figure 2 with the propeller in a folded position.

### DETAILED DESCRIPTION

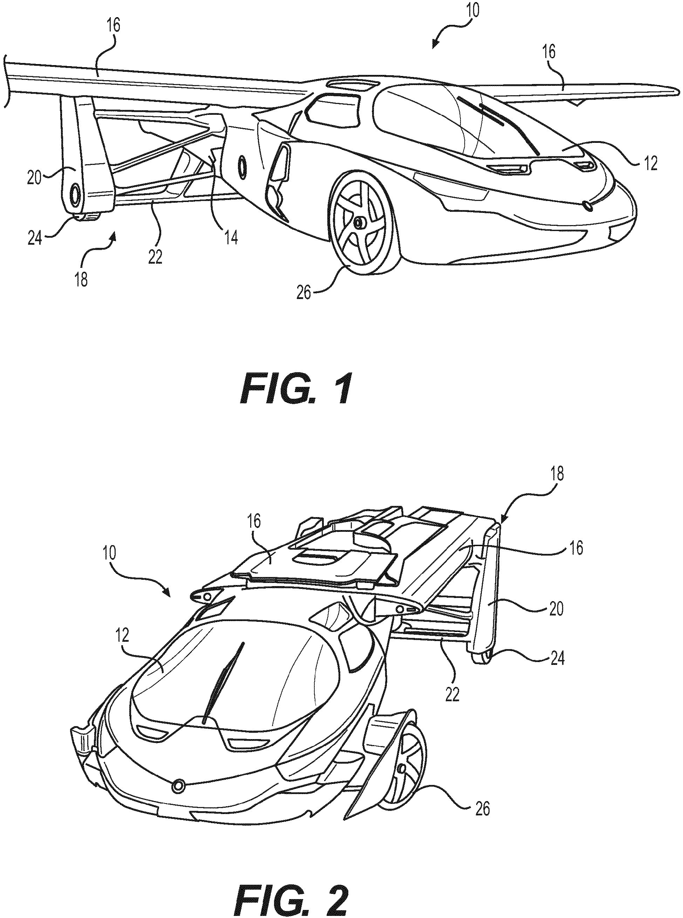

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/03240.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

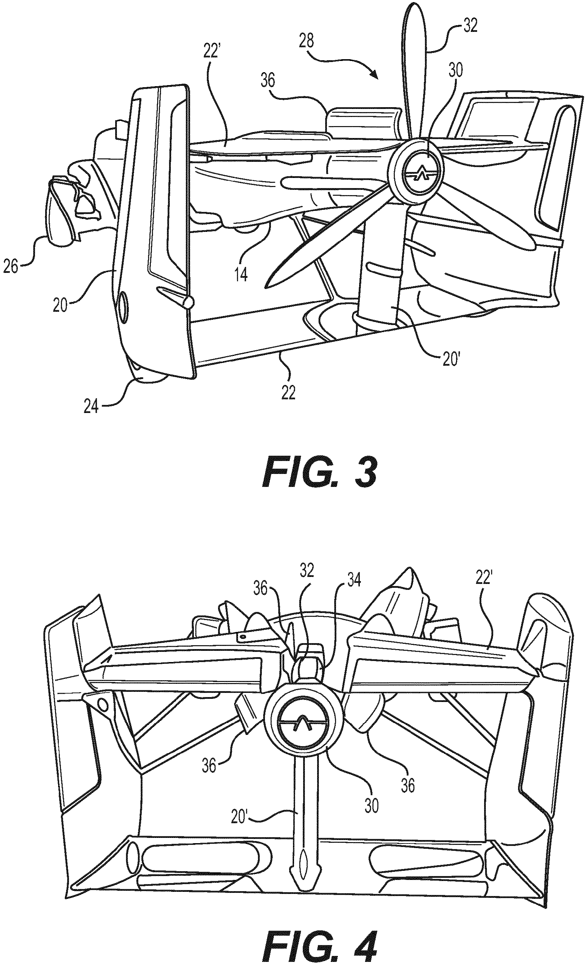

Referring now to Figures 3 and 4, the flying car shown therein comprises a folding propeller arrangement, in accordance with one embodiment of the invention. The views of Figures 3 and 4 correspond generally to that shown in Figure 2, but the wings are omitted for clarity.

Figure 3 shows a rear view of the flying car with a propeller 28 in its extended position as used in flight mode. The propeller comprises a hub 30 and three blades 32. The propeller 28 is mounted at the rear of the body section 14 behind the horizontal control surfaces 22 and is connected to the motor by the propeller shaft which runs along the upper part of the body.

The blades 32, with their sharp edges and tips are exposed at the rear of the vehicle in the flight configuration. In order to make the vehicle more safe for use on public roads, the propeller 28 is configured to be foldable. Figure 4 shows the propeller when folded. In this case, the propeller is initially arranged with one blade pointing upwards. Elongate blade housings 34 are provided in the rear part of the body section 14 adjacent the hub 30, and arranged 120 degrees apart so as to correspond with the arrangement of blades 32. The housings lie approximately parallel to the propeller shaft. In the configuration shown in the drawings, one housing 34 is provided above the upper horizontal control surface 22' and two are provided below the horizontal control surface 22', one on either side of the vertical control surface 20'

A housing cover 36 is provided for each housing, and is hinged along one edge. For folding of the propeller, the covers 36 are hinged open (as shown in Figures 3 and 4). The hub includes a locking mechanism which can be operated by a user so as to release the blades 32 from the radial extended position and allow them to fold back into the housings 32 (see Figure 4). The covers 36 can then be closed so that the blades are completely covered and so safer for road use.

This operation is substantially reversed to change the vehicle from road use mode to flight mode. The covers 36 are opened, the propeller blades 32 are moved into the radially extended position and the hub mechanism locked, and the housing covers closed.

Changes can be made while remaining within the scope of the invention. For example, the number of propeller blades can be selected according to requirements. In addition, the configuration of the tail section, both in terms to layout and number, position and function of vertical and horizontal control surfaces can be changed according to design selection. Angled control surfaces providing both horizontal and vertical control can be used.

Additionally, while the invention has been described in relation to the positioning of a propeller at the rear of a vehicle, it is also possible that the propeller can be mounted elsewhere, such as at the front of a vehicle, or on a lateral body or engine pod. These and other changes fall within the scope of this invention.

## Claims

1. An aircraft, comprising:
a body structure, lift structures, control structures, and a motor;
a propeller connected to the motor and mounted for rotation about a drive axis to provide thrust;
the propeller comprising a hub having a plurality of blades connected thereto; and
a plurality of blade housings adjacent the propeller and extending substantially parallel to the drive axis;
wherein
the blades are mounted on the hub so as to be moveable between an expanded position in which the blades project radially from the hub, and a folded position in which each blade extends axially from the hub so as to lie in a respective blade housing.

2. An aircraft as claimed in claim 1, wherein the propeller is mounted at a foremost or a rearmost extremity of the body structure.

3. An aircraft as claimed in claim 1 or 2, comprising horizontal and/or vertical control surfaces adjacent the propeller hub.

4. An aircraft as claimed in claim 3, wherein blade housings are provided on either side of at least one control surface.

5. An aircraft as claimed in claim 4, wherein the control surfaces form part of a tail section, the tail section including horizontal control surface and blade housings being provided above and below the horizontal control surface.

6. An aircraft as claimed in any preceding claim, wherein moveable housing covers are provided adjacent the blade housings, each cover being movable between a closed position in which it closes a respective housing cavity, and an open position in which the respective blade housing is open to allow a propeller blade to be moved into or out of the blade housing.

7. An aircraft as claimed in any preceding claim, wherein the hub comprises a locking mechanism that allows the blades to be moved between the expanded and folded positions, and is operable to lock the blades in the expanded position.

8. An aircraft as claimed in any preceding claim, comprising a convertible vehicle having a flight configuration and a road use configuration, wherein the road use configuration includes the folded position for the propeller blades.

9. An aircraft as claimed in claim 8, wherein the convertible vehicle comprises wings that are moveable between an extended position for the flight configuration, and a folded position for the road use configuration, the long axis of each wing lying substantially parallel to the long axis of the body structure in the folded position.

10. An aircraft as claimed in claim 9, wherein the propeller is mounted on a tail structure comprising horizontal and vertical control surfaces, and wheels to support the vehicle when on the ground.

11. An aircraft as claimed in claim 9, wherein when the propeller is in the folded position, no part of the blades extends rearward of the hub.

12. An aircraft as claimed in any preceding claim, wherein the propeller has three blades, the propeller being positioned with one of the blades projecting substantially vertically upwards immediately prior to moving the blades into the folding position, said blade lying in a blade housing in an upper surface of the body structure when in the folded position.

13. An aircraft as claimed in any preceding claim, comprising a propeller shaft extending along the drive axis and connecting the hub to the motor, the blades in the folded position lying substantially parallel to the drive shaft.
